# EUROPÄISCHE PATENTSCHRIFT

(11) **EP 3 661 692 B1**
(45) Veröffentlichungstag und Bekanntmachung des Hinweises auf die Patenterteilung: **03.05.2023**
(21) Anmeldenummer: 18750124.2
(22) Anmeldetag: 27.07.2018
(51) Int. Cl.: B23K 26/38

(54) **VERFAHREN ZUM LASERSCHNEIDEN PLATTENFÖRMIGER WERKSTÜCKE**
METHOD FOR LASER CUTTING FLAT WORKPIECES
PROCÉDÉ DE DÉCOUPE AU LASER DE PIÈCES PLATES

(30) Priorität: 02.08.2017 DE 102017213394
(43) Veröffentlichungstag der Anmeldung: 10.06.2020
(60) Teilanmeldung: 23163643.2
(73) Patentinhaber: TRUMPF Werkzeugmaschinen SE + Co. KG, 71254 Ditzingen (DE)
(72) Erfinder: MACH, Patrick, 71384 Weinstadt (DE); BIRK, Marcel, 78713 Schramberg (DE); BEA, Martin, 70806 Kornwestheim (DE); KAISER, Tobias, 71277 Rutesheim (DE); ROMINGER, Volker, 71711 Steinheim (DE)
(74) Vertreter: Trumpf Patentabteilung
(86) Internationale Anmeldenummer: PCT/EP2018/070494
(87) Internationale Veröffentlichungsnummer: WO 2019/025327

(56) Entgegenhaltungen:
- DE-A1-102012 212 566
- DE-A1-102014 209 811
- JP-A- H04 231 192
- JP-A- H06 190 576
- JP-A- 2001 334 379
- JP-A- 2005 014 009
- JP-A- 2011 083 788
- THOMAS HIMMER: "Hochwertig schneiden mit CO2- und Faserlasern", BLECH INFORM, Nr. 3/2007, 31. Dezember 2007 (2007-12-31) , Seiten 50-53, XP055523948,

## Beschreibung

Die Erfindung betrifft ein Verfahren zum Laserschneiden eines insbesondere plattenförmigen Werkstücks entlang einer Bahnkurve mittels eines Laserstrahls, wobei zum Erzeugen eines Microjoints mit einer geringeren Höhe als die Werkstückdicke beim Laserschneiden des Werkstücks die Laserleistung des Laserstrahls auf einem der Länge des Microjoints entsprechenden Teilstück der Bahnkurve von einer zum Durchschneiden des Werkstücks ausreichenden, höheren Laserleistung auf eine zum vollständigen Durchschneiden des Werkstücks nicht ausreichende, niedrigere Laserleistung abgesenkt wird.

Ein derartiges Laserschneidverfahren ist beispielsweise durch die JPH06190576A bekannt geworden.

Beim Laserschneiden plattenförmiger Werkstücke ist es wichtig, dass die während des Schneidens entstehende Schlacke ungehindert nach unten aus dem Schnittspalt austreten kann. Um dies zu gewährleisten, besteht die Werkstückauflage in Laserschneidmaschinen für plattenförmige Werkstücke üblicherweise aus mehreren Auflageleisten, welche in einen Rahmen gesteckt sind. Die Auflageleisten weisen eine gezackte Form auf, so dass zum Werkstück nur ein punktförmiger Kontakt besteht. Je nach Größe und Lage eines Werkstückteils auf den Auflageleisten kann es beim Freischneiden des Werkstückteils durch die Einwirkung des Schneidgasdrucks zu einem Verkippen des Teils kommen. Dabei verkeilt sich das Werkstückteil zwischen den Auflageleisten und stellt sich auf, was zu einer Kollision des Schneidkopfs bzw. der Schneidgasdüse mit dem Werkstückteil führen kann. Außerdem wird eine automatisierte Entnahme der Werkstückteile durch die willkürliche Lage erschwert oder sogar verhindert. Kleinere Werkstückteile können bei einer ungünstigen Lage in die Zwischenräume zwischen den Auflageleisten fallen und so auf das unter der Werkstückauflage angeordnete Schlackeförderband oder in Auffangbehälter für die Schlacke gelangen.

Zur Lösung dieses Problems ist es bekannt, die Werkstückteile im Restwerkstück mit Hilfe sogenannter Microjoints, d.h. mittels im Schnittspalt verbleibender Verbindungsstege zwischen Werkstückteil und umgebenden Restwerkstück, zu fixieren, so dass ein Verkippen ausgeschlossen wird. Der Einsatz von Microjoints hat allerdings einige Nachteile: Microjoints erstrecken sich üblicherweise über die gesamte Werkstückdicke, so dass bei Werkstücken mit einer Dicke von mehr als 5 mm ein Herauslösen der Werkstückteile aus dem Restwerkstück von Hand nur sehr schwer oder gar nicht möglich ist. Nach dem Lösen der Werkstückteile verbleiben Rückstände der Microjoints an der Schnittkante und müssen durch aufwendige Nacharbeit entfernt werden. Außerdem werden Microjoints typischerweise am Schnittende gesetzt. Ist in einer Werkstückkontur aber mehr als ein Microjoint notwendig, so kann dieser nur durch zusätzliches Einstechen und Anfahren an die Kontur erzeugt werden. Dadurch sinkt die Produktivität des Schneidprozesses.

Aus JP2001334379A, JPH06190576A, JP2004105990A und JPH0788571A ist es bereits bekannt, Microjoints einzusetzen, die sich nicht über die gesamte Werkstückdicke erstrecken, sondern eine geringere Höhe als die Werkstückdicke aufweisen. Dazu werden mehrere Schneidparameter während der Erzeugung des Microjoints gegenüber den während des Laserschneidens der restlichen Kontur eingestellten Werten verändert.

In JP2001334379A wird offenbart, zum Erzeugen des Microjoints zunächst die Schneidgeschwindigkeit linear zu steigern und parallel die Laserleistung und den Schneidgasdruck zu senken. Anschließend wird der Schneidkopf, ohne zu schneiden, ein Stück zurück bewegt und danach die Laserleistung zunächst auf einen Maximalwert größer als die ursprüngliche Laserleistung erhöht, um wieder in das Werkstück einzustechen. Wenn der Gasdruck wieder auf den ursprünglichen Wert erhöht und die Laserleistung wieder auf die ursprüngliche Laserleistung abgesenkt worden ist, erfolgt das Schneiden der restlichen Kontur. Die Vielzahl der Verfahrensschritte erhöht allerdings die Komplexität des Verfahrens und die benötigte Zeit.

In der eingangs genannten JPH06190576A, welche den Oberbegriff der unabhängigen Ansprüche offenbart, wird offenbart, zum Erzeugen eines Microjoints die Laserleistung sprunghaft auf einen niedrigeren Wert abzusenken, die Schneidgeschwindigkeit linear zu erhöhen und den Druck verschiedener Gase sprunghaft zu ändern sowie anschließend die Laserleistung sprunghaft auf den ursprünglichen Wert zu erhöhen, die Schneidgeschwindigkeit auf den ursprünglichen Wert linear abzusenken sowie den Druck der Gase sprunghaft zu ändern.

Demgegenüber stellt sich der vorliegenden Erfindung die Aufgabe, ein Verfahren zum Laserschneiden weiter zu verbessern, so dass Microjoints mit verminderter Dicke in plattenförmigen Werkstücken prozesssicher und möglichst einfach erzeugt werden können.

Diese Aufgabe wird erfindungsgemäß durch ein Verfahren zum Laserschneiden eines insbesondere plattenförmigen Werkstücks entlang einer Bahnkurve mittels eines Laserstrahls mit den Merkmalen von Anspruch 1 oder Anspruch 2 gelöst. Besonders bevorzugt bleiben beim Erzeugen des Microjoints bis auf die Laserleistung alle anderen Schneidparameter des Laserschneidens unverändert.

Erfindungsgemäß wurde erkannt, dass ein lokaler Microjoint im unteren Bereich der Werkstückdicke prozesssicher allein durch das richtige Anpassen entweder der Laserleistung oder der Schneidgeschwindigkeit oder des Abstands einer Schneidgasdüse, durch die der Laserstrahl auf das Werkstück gerichtet wird, zum Werkstück während des Schneidprozesses, d.h. durch das richtige Anpassen eines einzelnen ausgewählten Parameters mittels geeignet gewählter Gradienten der Parameteränderung, generiert werden kann. Dem Schneidprozess steht durch die abgesenkte Laserleistung, die erhöhte Schneidgeschwindigkeit oder die durch den vergrößerten Abstand der Schneidgasdüse zum Werkstück bewirkte Defokussierung des Laserstrahls nicht mehr die für einen vollständigen Schnitt benötigte Streckenenergie und/oder der zum Austrieb der Schmelze benötigte Impuls des Schneidgases zur Verfügung. Dadurch wird das Werkstück nicht über die komplette Werkstückdicke aufgeschmolzen, so dass im unteren Bereich des Schnittspalts bzw. der Schnittkante ein Microjoint zwischen dem lasergeschnittenen Werkstückteil und dem Restwerkstück stehen bleibt. Nach der so erfolgten Erzeugung des Microjoints kann mit Standardparametern weitergeschnitten werden. Alternativ kann der Microjoint am Schnittende einer Kontur platziert und der Laserstrahl nach dem Erzeugen des Microjoints mit der niedrigeren Laserleistung ausgeschaltet werden, wenn bei einer in sich geschlossenen Schneidkontur der Startpunkt wieder erreicht ist oder die Schneidkontur an einer Werkstückkante endet.

Überraschend hat sich gezeigt, dass der Gradient des zeitlichen Abfalls und der Gradient des Anstiegs des geänderten Parameters unterschiedlich sein müssen, um einen Microjoint reproduzierbar und prozesssicher zu erzeugen. Dies lässt sich durch eine Trägheit des Schneidprozesses gegenüber der Änderung von Schneidparametern erklären: Der Übergang vom "Gut-Schnitt" in den "Schlecht-Schnitt" beim Absenken der Laserleistung, Erhöhen der Schneidgeschwindigkeit oder Vergrößern des Abstands zwischen der Schneidgasdüse und dem Werkstück verläuft anders als der Übergang vom "Schlecht-Schnitt" in den "Gut-Schnitt" beim Anstieg der Laserleistung bzw. der Verringerung der Schneidgeschwindigkeit oder des Abstands zwischen Schneidgasdüse und Werkstück. Außerdem sind die Gradienten der Parameteränderung auch davon abhängig, wie hoch die Schneidgeschwindigkeit ist, wie der Austrieb der Schmelze aus dem Schnittspalt erfolgt und welche Form (länglich, rundlich) ein stabiler Microjoint aufweisen muss.

Vorzugsweise erfolgt der Leistungsabfall von der höheren auf die niedrigere Laserleistung nicht sprunghaft, sondern dauert mindestens 5 ms, bevorzugt mindestens 8 ms, bevorzugt mindestens 10 ms. Gleiches gilt in einer alternativen Variante für die Erhöhung der Schneidgeschwindigkeit oder des Abstands zwischen der Schneidgasdüse und dem Werkstück.

Der Leistungsabfall von der höheren auf die niedrigere Laserleistung kann beispielsweise eine exponentiell abfallende Kurve sein oder, was bevorzugt ist, linear oder nahezu linear verlaufen. Ebenso kann der Leistungsanstieg von der niedrigeren auf die höhere Laserleistung beispielsweise eine exponentiell ansteigende Kurve sein oder, was bevorzugt ist, linear oder nahezu linear verlaufen. Gleiches gilt für die Änderung der Schneidgeschwindigkeit oder des Abstands zwischen der Schneidgasdüse und dem Werkstück.

Die niedrigere Laserleistung verläuft vorzugsweise zeitlich konstant oder nahezu konstant auf einem Sockelniveau, kann aber auch zeitlich variieren, also beispielsweise nach dem Leistungsabfall linear ansteigen oder auch weiter linear abfallen, bevor dann der Leistungsanstieg auf die höhere Laserleistung erfolgt. Gleiches gilt für den Verlauf der erhöhten Schneidgeschwindigkeit oder des vergrößerten Abstands zwischen der Schneidgasdüse und dem Werkstück.

Für den Fall eines Sauerstoff-Brennschnittes, bei dem der Laserschnitt mit Sauerstoff als Schneidgas durchgeführt wird, haben Versuche überraschenderweise gezeigt, dass Microjoints verminderter Dicke nur dann prozesssicher erzeugt werden können, wenn der Leistungsanstieg von der niedrigeren auf die höhere Laserleistung langsamer erfolgt als der Leistungsabfall von der höheren auf die niedrigere Laserleistung, bevorzugt mindestens doppelt so lange dauert. Beim Erzeugen des Microjoints erfolgt die Leistungsabsenkung also schneller als die Leistungssteigerung. Für den Fall linearer Absenk- und Anstiegskurven sollten vorteilhafterweise der Betrag der Absenksteigung größer als der Betrag der Anstiegssteigung und der Betrag des Verhältnisses von Absenkungs- zu Anstiegssteigung für alle Blechdicken konstant größer als 1, bevorzugt größer als 2, sein. Dieser Effekt lässt sich dadurch erklären, dass beim Übergang vom "Schlecht-Schnitt" in den "Gut-Schnitt" am Ende des Leistungsanstiegs alle Prozessgrößen optimal sein müssen, um die ideale Schneidfront auszubilden, d.h., dass der Übergang vom "Schlecht-Schnitt" in den "Gut-Schnitt" anspruchsvoller ist. Beim Brennschnitt, bei dem auch die exotherme Oxidationsreaktion wesentlich zum Schneidprozess beiträgt, wird eine lange Übergangszeit benötigt, bis sich optimale Parameter für den "Gut-Schnitt" wieder einstellen. Dieser Zusammenhang muss analog beachtet werden, wenn die Schneidgeschwindigkeit oder der Abstand der Schneidgasdüse zum Werkstück variiert wird: Die Verringerung der Schneidgeschwindigkeit oder die Verringerung des Abstands der Schneidgasdüse zum Werkstück muss langsamer erfolgen als die Erhöhung, bevorzugt mindestens doppelt so lange dauern.

Wie die Versuche weiter gezeigt haben, sollten beim Sauerstoff-Brennschnitt der Leistungsanstieg von der niedrigeren auf die höhere Laserleistung bevorzugt mindestens 30 ms und der Zeitabschnitt der niedrigeren Laserleistung bevorzugt mindestens 20 ms dauern. Die niedrigere Laserleistung muss an unterschiedliche Werkstückdicken angepasst werden; bei zunehmender Werkstückdicke nimmt auch die niedrigere Laserleistung zu. Dennoch können für alle Werkstückdicken die Zeitabschnitte des Leistungsabfalls, des Leistungsanstiegs und der niedrigeren Laserleistung gleichlang oder nahezu gleichlang gewählt werden. Diese Werte gelten analog für die Änderung der Schneidgeschwindigkeit oder des Abstands von Schneidgasdüse zu Werkstück.

Für den Fall eines Schmelzschnittes, bei dem der Laserschnitt mit einem Inertgas, beispielsweise Stickstoff, oder einem Inertgas-Luft-Gemisch (z.B. Druckluft) als Schneidgas durchgeführt wird, haben Versuche überraschenderweise gezeigt, dass Microjoints verminderter Dicke nur dann prozesssicher erzeugt werden können, wenn der Leistungsanstieg von der niedrigeren auf die höhere Laserleistung schneller erfolgt als der Leistungsabfall von der höheren auf die niedrigere Laserleistung, bevorzugt mindestens doppelt, besonders bevorzugt mindestens 5mal so schnell. Beim Erzeugen des Microjoints erfolgt die Leistungsabsenkung also langsamer als die Leistungssteigerung. Die Leistungssteigerung muss schneller erfolgen, um eine ideale (steilere) Schneidfrontneigung zu erhalten, so dass die Schmelze wieder sicher nach unten aus dem Schnittspalt ausgetrieben wird. Für den Fall linearer Absenk- und Anstiegskurven sollten vorteilhafterweise der Betrag der Absenksteigung kleiner als der Betrag der Anstiegssteigung und der Betrag des Verhältnisses von Absenk- zu Anstiegssteigung für alle Werkstückdicken kleiner als 1, vorzugsweise kleiner als 0,5 und insbesondere gleich 0,1 sein. Gleiches gilt, wenn die Schneidgeschwindigkeit oder der Abstand der Schneidgasdüse zum Werkstück variiert wird: Die Verringerung der Schneidgeschwindigkeit oder die Verringerung des Abstands der Schneidgasdüse zum Werkstück muss schneller erfolgen als die Erhöhung, bevorzugt mindestens doppelt, besonders bevorzugt mindestens 5mal so schnell.

Wie die Versuche weiter gezeigt haben, sollten beim Stickstoff-Schmelzschnitt der Leistungsanstieg von der niedrigeren auf die höhere Laserleistung weniger als 5 ms, bevorzugt weniger als 2 ms, und der Zeitabschnitt der niedrigeren Laserleistung mindestens 5 ms, bevorzugt mindestens 8 ms, dauern. Weiterhin sollten die niedrigere Laserleistung mindestens 3 kW betragen und der Schneidgasdruck kleiner als 10 bar sein. Für alle Werkstückdicken können die Zeitabschnitte des Leistungsabfalls, des Leistungsanstiegs und der niedrigeren Laserleistung gleichlang oder nahezu gleichlang gewählt werden. Diese Werte gelten ebenso bei einer Variation der Schneidgeschwindigkeit oder des Abstands zwischen der Schneidgasdüse und dem Werkstück.

Die Erfindung betrifft schließlich auch ein Computerprogrammprodukt, welches Codemittel aufweist, die zum Durchführen aller Schritte des Verfahrens nach einem der vorhergehenden Ansprüche angepasst sind, wenn das Programm auf einer Steuerung einer Laserbearbeitungsmaschine abläuft.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine zum Durchführen des erfindungsgemäßen Laserschneidverfahrens geeignete Laserschneidmaschine;
- Fign. 2a, 2b: ein aus einem Werkstück lasergeschnittenes Werkstückteil, das durch Microjoints im Restwerkstück gehalten ist, in einer Draufsicht (Fig. 2a) und in einer Schnittansicht (Fig. 2b) entsprechend IIb-IIb in Fig. 2a;
- Fig. 3: eine erfindungsgemäße erste Leistungs-Absenkrampe zum Erzeugen eines Microjoints beim Laserschneiden eines Werkstücks mit Sauerstoff als Schneidgas;
- Fig. 4: eine erfindungsgemäße zweite Leistungs-Absenkrampe zum Erzeugen eines Microjoints beim Laserschneiden eines Werkstücks mit Stickstoff als Schneidgas; und
- Fign. 5a-5f: das Durchtrennen eines Microjoints beim Herausdrücken eines zwischen einem Ausdrückelement und einem Gegenhalter verkippsicher gehaltenen, lasergeschnittenen Werkstückteils aus dem Restwerkstück (nicht Gegenstand der Erfindung).

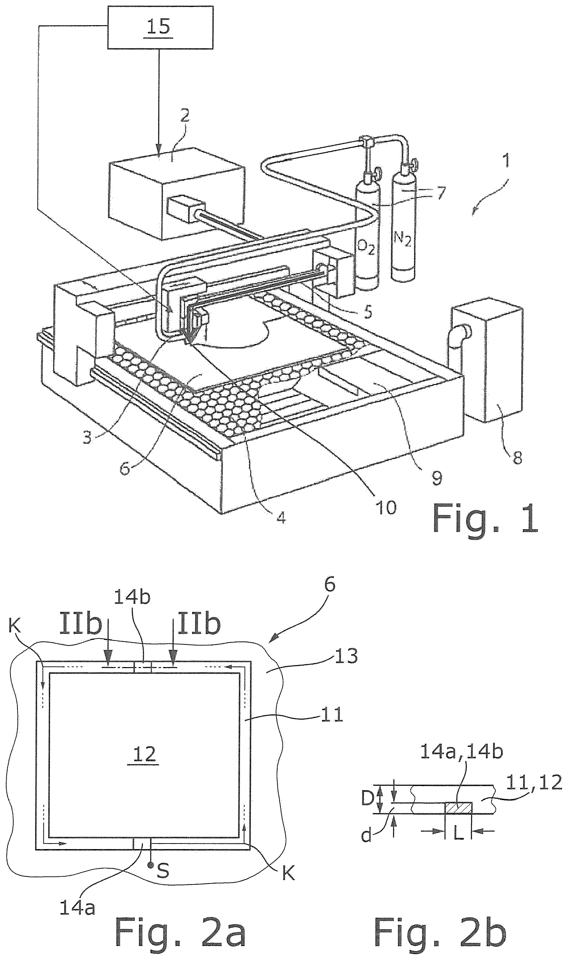

Die in **Fig. 1** perspektivisch dargestellte Laserschneidmaschine **1** weist beispielsweise einen CO₂-Laser, Diodenlaser oder Festkörperlaser als Laserstrahlerzeuger **2**, einen verfahrbaren (Laser)Bearbeitungskopf **3** und eine Werkstückauflage **4** auf. Im Laserstrahlerzeuger 2 wird ein Laserstrahl **5** erzeugt, der mittels eines (nicht gezeigten) Lichtleitkabels oder (nicht gezeigten) Umlenkspiegeln vom Laserstrahlerzeuger 2 zum Bearbeitungskopf 3 geführt wird. Auf der Werkstückauflage 4 ist ein plattenförmiges Werkstück **6** angeordnet. Der Laserstrahl 5 wird mittels einer im Bearbeitungskopf 3 angeordneten Fokussieroptik auf das Werkstück 6 gerichtet. Die Laserschneidmaschine 1 wird darüber hinaus mit Schneidgasen **7**, beispielsweise Sauerstoff und Stickstoff, versorgt. Die Verwendung des jeweiligen Schneidgases 7 ist vom Werkstückmaterial und von Qualitätsanforderungen an die Schnittkanten abhängig. Weiterhin ist eine Absaugeinrichtung 8 vorhanden, die mit einem Absaugkanal 9, der sich unter der Werkstückauflage 4 befindet, verbunden ist. Das Schneidgas 7 wird einer Schneidgasdüse 10 des Bearbeitungskopfes 3 zugeführt, aus der es zusammen mit dem Laserstrahl 5 austritt.

Beim Laserschneiden wird das Werkstück 6 entlang einer gewünschten Bahnkurve K mittels eines Laserstrahls 5 mit einer zum Durchschneiden des Werkstücks 6 ausreichenden, höheren Laserleistung **P_{A}** geschnitten, wobei vorliegend der Laserstrahl 5, alternativ oder zusätzlich aber auch das Werkstück 6 bewegt wird. Dazu muss zunächst auf oder neben der zu schneidenden Bahnkurve Kan einem Punkt S in das Werkstück eingestochen werden, wie in **Fig. 2a** gezeigt ist.

Wie in **Fign. 2a, 2b** gezeigt, werden beim Laserschneiden des Werkstücks 6 im Schnittspalt **11** zwischen einem lasergeschnittenen Werkstückteil **12** und dem Restwerkstück **13** Verbindungsstege bzw. Microjoints **14a**, **14b** stehen gelassen, die das Werkstückteil 12 im Restwerkstück 13 fixieren und somit ein Verkippen gegenüber dem Restwerkstück 13 verhindern. Wie in Fig. 2b gezeigt, erstreckt sich der Microjoint 14 nicht über die gesamte Werkstückdicke **D**, sondern nur im unteren Drittel der Werkstückdicke, weist also eine geringere Höhe **d** als die Werkstückdicke D auf. Der Microjoint 14a befindet sich am Schnittende, wird also erzeugt, kurz bevor der Startpunkt S der in sich geschlossenen Bahnkurve K wieder erreicht ist. Der Microjoint 14b befindet sich dagegen nicht am Schnittende, sondern an einem beliebigen Teil der Bahnkurve K.

Im Folgenden wird das erfindungsgemäße Verfahren am Beispiel der Variation der Laserleistung beschrieben. Bei dieser Ausführung des Verfahrens werden die Microjoints 14a, 14b allein durch gezieltes Anpassen der Laserleistung während des Schneidprozesses mittels geeignet gewählter Leistungsgradienten generiert, die von einer in Fig. 1 gezeigten Steuerung **15** der Laserschneidmaschine 1 in Abhängigkeit des Werkstückmaterials vorgegeben werden. Die Steuerung 15 steuert auch die Bewegung des Bearbeitungskopfes 3 gegenüber dem Werkstück 6. Dem Schneidprozess steht durch die abgesenkte Laserleistung nicht mehr die für einen vollständigen Schnitt benötigte Streckenenergie zur Verfügung, so dass das Werkstückmaterial nicht über die komplette Werkstückdicke D aufgeschmolzen wird und im unteren Bereich des Schnittspalts 11 bzw. der Schnittkante ein Microjoint 14a, 14b zwischen dem lasergeschnittenen Werkstückteil 6 und dem Restwerkstück 13 stehen bleibt. Bis auf die Laserleistung bleiben bei der Erzeugung des Microjoints 14a, 14b alle anderen Schneidparameter des Laserschneidens unverändert, also z.B. die Fokuslage des Laserstrahls 5, der Abstand der Schneidgasdüse 10 zur Werkstückoberfläche, der Schneidgasdruck und die Schneidgeschwindigkeit. Nach der Erzeugung des Microjoints 14b wird mit den Standardparametern weitergeschnitten. Nach der Erzeugung des Microjoints 14a wird der Laserstrahl 5 ausgeschaltet.

Zum Erzeugen des nicht am Ende der Bahnkurve K liegenden Microjoints 14b mit einer geringeren Höhe d als die Werkstückdicke D wird beim Laserschneiden des Werkstücks 6 die Laserleistung des Laserstrahls 5 auf einem der Länge L des Microjoints 14 entsprechenden Teilstück der Bahnkurve von der zum Durchschneiden des Werkstücks 6 ausreichenden, höheren Laserleistung P_{A} auf eine zum vollständigen Durchschneiden des Werkstücks 6 nicht ausreichende, niedrigere Laserleistung **P**s abgesenkt und anschließend wieder auf die höhere Laserleistung P_{A} erhöht.

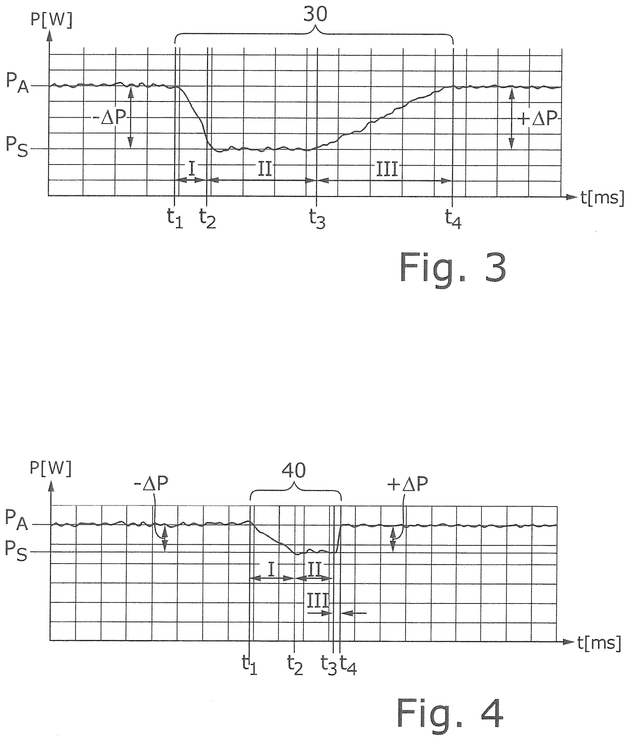

Fig. 3 zeigt den zeitlichen Verlauf der Laserleistung mit einem Zeitbereich 30 zum Erzeugen des Microjoints 14b beim sogenannten Sauerstoffschnitt, also beim Laserschneiden des Werkstücks 6 unter Verwendung von Sauerstoff als Prozessgas 7. Beim Sauerstoffschnitt wird das Werkstückmaterial geschmolzen und größtenteils oxidiert. Im gezeigten Ausführungsbeispiel erfolgte der Sauerstoffschnitt an einem Baustahl-Werkstück 6 einer Werkstückdicke D von 5 mm und mit einer Laserleistung P_{A} von mehr als 3000 W.

Der Zeitbereich 30 ist in drei Zeitabschnitte I-III unterteilt:

| | |
|---|---|
| I (t1 bis t2): | lineare Leistungsabsenkung **-ΔP** von der höheren Laserleistung **P_{A}** (3,5 kW) auf die niedrigere Laserleistung Ps innerhalb von ca. 15 ms, |
| II (t2 bis t3): | Halten der niedrigeren Laserleistung (Sockelleistung) Ps über ca. 25 ms, und |
| III (t3 bis t4) | lineare Leistungssteigerung **+ΔP** von der niedrigeren Laserleistung Ps auf die höhere Laserleistung P_{A} innerhalb von ca. 40 ms. |

Beim Erzeugen des Microjoints 14b mittels Sauerstoffschnitt erfolgt der Leistungsanstieg +ΔP von der niedrigeren auf die höhere Laserleistung im Zeitintervall III langsamer als der Leistungsabfall -ΔP von der höheren auf die niedrigere Laserleistung im Zeitintervall I, im gezeigten Ausführungsbeispiel sogar mehr als doppelt so lange. Der Leistungsabfall -ΔP im Zeitintervall I und der Leistungsanstieg +ΔP im Zeitintervall III verlaufen jeweils linear oder nahezu linear, wobei der Betrag des Gradienten dP/dt im Zeitintervall I größer als der Betrag des Gradienten dP/dt im Zeitintervall III ist. Der Betrag des Verhältnisses der Gradienten ist größer als 2 und beträgt im gezeigten Ausführungsbeispiel ca. 2,67. Beim Erzeugen des Microjoints 14a (nicht Gegenstand der Erfindung) verlaufen der Leistungsabfall - ΔP im Zeitintervall I und das Halten der niedrigeren Laserleistung Ps im Zeitintervall II analog. Am Ende des Zeitintervalls II wird der Laserstrahl ausgeschaltet, und der Schnitt ist beendet. Der Zeitpunkt t1, an dem der Leistungsabfall -ΔP beginnt, wird so gewählt, dass am Ende des Zeitintervalls II der Startpunkt der Bahnkurve K wieder erreicht ist.

Die Höhe der niedrigeren Laserleistung (Sockelleistung) Ps muss an unterschiedliche Werkstückdicken D angepasst werden; bei zunehmender Werkstückdicke D nimmt auch die Sockelleistung Ps im Bereich zwischen 100 W und 3000 W zu.

Die Zeitabschnitte I-III können für alle Werkstückdicken D gleich lang gewählt werden. Die Sockelleistung Ps sollte über mindestens 25 ms gehalten werden, damit der erzeugte Microjoint 14a, 14b eine ausreichende Festigkeit aufweist. Der Betrag des Verhältnisses von Absenkungs- zu Anstiegsgradient ist für alle Blechdicken D größer als 1, bevorzugt größer als 2 und beträgt insbesondere ca. 2,67.

**Fig. 4** zeigt den zeitlichen Verlauf der Laserleistung mit einem Zeitbereich **40** zum Erzeugen des nicht am Ende der Bahnkurve K liegenden Microjoints 14b beim sogenannten Schmelzschnitt, also beim Laserschneiden des Werkstücks 6 unter Verwendung von einem Inertgas oder einem Inertgas-Sauerstoff-Gemisch, z.B. Stickstoff, als Schneidgas 7. Beim Schmelzschnitt wird das Werkstückmaterial lediglich geschmolzen. Die entstandene Schmelze wird dann ausgeblasen und zusammen mit dem Schneidgas 7 über den Absaugkanal 9 durch die Absaugeinrichtung 8 abgesaugt. Für den Schmelzschnitt wird bei gleicher Werkstückdicke und gleichem Material eine Leistung von 8 kW benötigt, da das Prozessgas keine Prozessenergie beiträgt und die Schneidgeschwindigkeiten höher sind als beim Brennschnitt. Im gezeigten Ausführungsbeispiel erfolgte der Stickstoff-Schmelzschnitt ebenfalls an einem Baustahl-Werkstück 6 einer Werkstückdicke D von 5 mm, aber mit einer Ausgangsleistung von 8 kW und einem Schneidgasdruck von 6 bar. Der größte Unterschied zwischen Sauerstoff-Brennschnitt und Stickstoff-Schmelzschnitt besteht in den höheren Vorschubgeschwindigkeiten beim Schmelzschnitt. Daher sind sowohl die Zeitdauern der Leistungsabsenkung bzw. Leistungssteigerung als auch die Zeitdauer für das Halten der Sockelleistung deutlich geringer als beim Brennschnitt. Aufgrund der kürzeren Zeiten und der relativ zur Ausgangsleistung geringeren Absenkung ist der Einfluss auf den Schneidprozess geringer. Die Laserleistung muss im Vergleich zum Brennschnitt weniger weit relativ zur Ausgangsleistung abgesenkt werden, da das Prozessgas keine Energie zum Schneidprozess beiträgt.

Untersuchungen beim Schmelzschnitt haben gezeigt, dass die prozesssichere Erzeugung von Microjoints 14a, 14b mit einer Höhe d kleiner als die Werkstückdicke D nur bei reduziertem Schneidgasdruck möglich ist, dass der Schneidgasdruck also einen entscheidenden Faktor für die erfolgreiche Erzeugung eines Mikrojoints 14a, 14b beim Schmelzschnitt darstellt. Durch den bisher beim Schmelzschnitt üblichen Schneidgasdruck von deutlich über 10 bar lässt sich eine reproduzierbare Erzeugung des Microjoints 14a, 14b nicht erreichen. Zwar kann durch eine Reduzierung der Laserleistung eine Verbindung zwischen dem Werkstückteil und dem Restgitter erzeugt werden, jedoch schwankt die Höhe und Stabilität des erzeugten Microjoints 14a, 14b schon bei geringen Schwankungen der Laserleistung von weniger als 50 W deutlich. Es hat sich vielmehr gezeigt, dass sich Microjoints 14a, 14b durch Leistungsvariation prozesssicher erzeugen lassen, wenn der Druck des Schneidgases 4 unter 10 bar beträgt.

Der Zeitbereich 40 ist in drei Zeitabschnitte I-III unterteilt:

| | |
|---|---|
| I (t1 bis t2): | lineare Leistungsabsenkung -ΔP von der höheren Laserleistung P_{A} auf die niedrigere Laserleistung Ps innerhalb von ca. 10 ms, |
| II (t2 bis t3): | Halten der niedrigeren Laserleistung (Sockelleistung) Ps über ca. 8 ms, und |
| III (t3 bis t4) | lineare Leistungssteigerung +ΔP von der niedrigeren Laserleistung Ps auf die höhere Laserleistung **P_{A}** innerhalb von ca. 1 ms. |

Beim Erzeugen des Microjoints 14b mittels Stickstoff-Schmelzschnitt erfolgt der Leistungsanstieg +ΔP im Zeitabschnitt III schneller als der Leistungsabfall -ΔP im Zeitabschnitt I, bevorzugt mindestens doppelt, besonders bevorzugt mindestens 5mal so schnell, im gezeigten Ausführungsbeispiel sogar ca. 10 mal so schnell. Der Leistungsabfall -ΔP im Zeitabschnitt I und der Leistungsanstieg +ΔP im Zeitabschnitt III verlaufen jeweils linear oder nahezu linear, wobei der Betrag des Leistungsgradienten dP/dt im Zeitabschnitt I kleiner als der Betrag des Leistungsgradienten dP/dt im Zeitabschnitt III ist. Der Betrag des Verhältnisses der Gradienten ist kleiner als 1, vorzugsweise kleiner als 0,5, und beträgt im gezeigten Ausführungsbeispiel ca. 0,1.

Beim Erzeugen des Microjoints 14a (nicht Gegenstand der Erfindung) verlaufen der Leistungsabfall -ΔP im Zeitintervall I und das Halten der niedrigeren Laserleistung Ps im Zeitintervall II ebenso wie beim Erzeugen des Microjoints 14b. Am Ende des Zeitintervalls II wird der Laserstrahl jedoch ausgeschaltet, und der Schnitt ist beendet. Der Zeitpunkt t1, an dem der Leistungsabfall -ΔP beginnt, wird so gewählt, dass am Ende des Zeitintervalls II der Startpunkt der Bahnkurve K wieder erreicht ist.

Die einzelnen Zeitabschnitte I-III sind kürzer als beim Sauerstoff-Brennschnitt, da die Schneidgeschwindigkeit höher ist und das Schneidgas keinen Energiebeitrag leistet. So ist schon nach einer geringeren Zeitdauer ein ausreichend langer und stabiler Mikrojoint 14a, 14b gebildet. Die Sockelleistung Ps sollte über mindestens 8 ms gehalten werden, damit der erzeugte Microjoint 14a, 14b eine ausreichende Festigkeit aufweist. Durch die Wahl von Sockelleistung Ps und Dauer des Zeitabschnitts II kann die Festigkeit des Microjoints 14a, 14b beeinflusst werden.

Die Höhe der Sockelleistung Ps kann an unterschiedliche Werkstückdicken D angepasst werden, muss aber mindestens 3000 W betragen.

Die Zeitabschnitte I-III können für alle Werkstückdicken D gleich lang gewählt werden. Der Betrag des Verhältnisses von Absenkungs- zu Anstiegsgradient ist für alle Blechdicken D kleiner als 1, vorzugsweise kleiner als 0,5 und beträgt insbesondere ca. 0,1.

Mit dem erfindungsgemäßen Verfahren können sowohl beim Sauerstoff-Brennschnitt als auch beim Stickstoff-Schmelzschnitt Microjoints 14a, 14b mit reduzierter Höhe d prozesssicher erzeugt werden, die sich einfach manuell auftrennen lassen und nur geringe Rückstände auf der Schneidkante hinterlassen. Da die Schneidgeschwindigkeit während der Bildung des Microjoints 14a, 14b nicht reduziert werden muss, bleibt die Produktivität des Schneidprozesses erhalten. Es muss nur ein Bearbeitungsparameter variiert werden, und es entstehen kurze, stabile Microjoints 14a, 14b, die auch in Bahnkurven K mit engen Radien platziert werden können. Je nach Art des zu schneidenden Werkstücks sowie Form und Größe der Bahnkurven kann es aber auch vorteilhaft sein, eine alternative Variante des erfindungsgemäßen Verfahrens anzuwenden und nicht die Laserleistung, sondern die Schneidgeschwindigkeit oder den Abstand zwischen der Schneidgasdüse 10 und dem Werkstück 6 zu ändern.

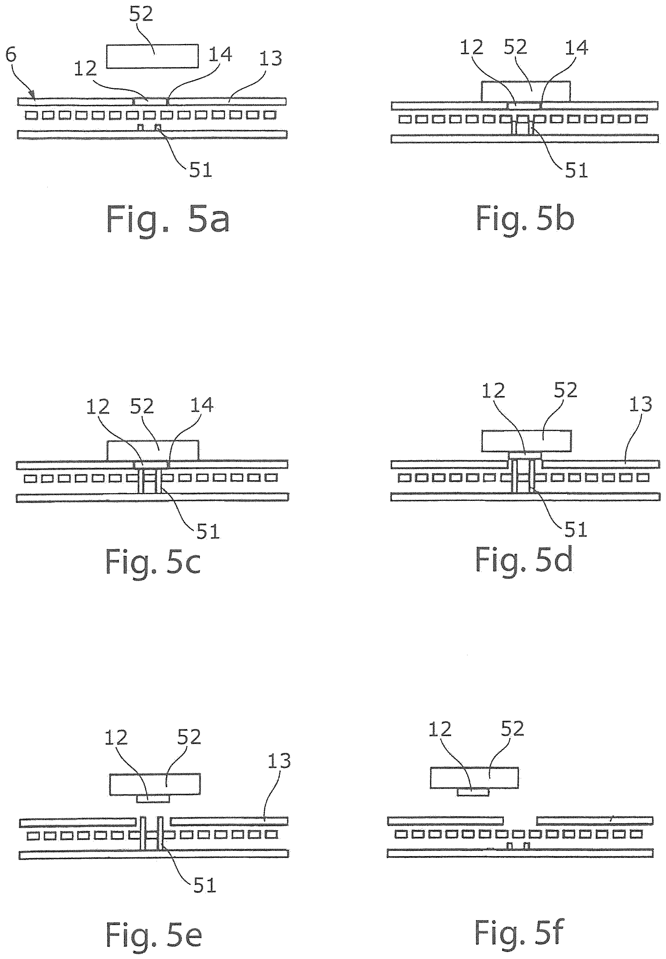

In den **Fign. 5a-5f** ist das Durchtrennen eines Microjoints 14 beim (Sandwich)-Herausdrücken eines zwischen mehreren Ausdrückelementen (z.B. Aushebestifte) 51 und einem als Vakuumsauger ausgebildeten, flächigen Gegenhalter 52 verkippsicher gehaltenen, lasergeschnittenen Werkstückteils 12 aus dem Restwerkstück 13 gezeigt (nicht Gegenstand der Erfindung).

Fig. 5a zeigt das lasergeschnittene Werkstückteil 12, das über mehrere Microjoints 14, welche eine geringere Höhe als die Werkstückdicke aufweisen, noch im Restwerkstück 13 gehalten ist. In Fig. 5b ist der Gegenhalter 52 von oben auf das Werkstückteil 12 und den angrenzenden Randbereich des Restwerkstücks 13 abgesenkt. Die Ausdrückelemente 51 fahren hoch, bis sie in Fig. 5c an der Unterseite des Werkstückteils 12 anliegen und somit das Werkstückteil 12 verkippsicher zwischen den Ausdrückelementen 51 und dem Gegenhalter 52 gehalten ist. Anschließen fahren die Ausdrückelemente 51 und der Gegenhalter 52 synchron hoch, wodurch das Werkstückteil 12 aus dem Restwerkstück 13 hochgedrückt wird und dabei die Microjoints 14 durchtrennt werden (Fig. 5d). Die Saugfunktion des Gegenhalters 52 wird aktiviert, um das Werkstückteil 12 am Gegenhalter 52 zu halten und abtransportieren zu können (Fign. 5e, 5f).

Indem das Werkstückteil 12 von der gegenüberliegenden Seite durch den Gegenhalter 52 stabilisiert und in waagerechter Ausrichtung gehalten wird, können die Microjoints 14 gut durchtrennt werden, ohne dass es zu einem Verhaken oder Verkanten des Werkstückteils 12 im Restwerkstück 13 kommt. Das Ausdrücken kann dabei sowohl von oben als auch von unten erfolgen. Durch die reduzierte Höhe der Microjoints 14 ist die Kraft, die zum Durchtrennen der Microjoints 14 benötigt wird, nicht wesentlich höher als die zum Ausdrücken des Werkstückteils 12 aus dem Schnittspalt benötigte Kraft, was eine prozesssichere Entnahme ermöglicht.

Vorzugsweise wird die Positionierung des Ausdrückelements 51 bzw. der Ausdrückelemente 51 so gewählt, dass die von den Ausdrückelementen 51 aufgespannte Fläche gegenüber dem Schwerpunkt des Werkstückteils 12 in Richtung auf den oder die Microjoints 14 versetzt ist.

## Patentansprüche

1. Verfahren zum Laserschneiden eines insbesondere plattenförmigen Werkstücks (6) entlang einer Bahnkurve (K) mittels eines Laserstrahls (5), wobei zum Erzeugen eines Microjoints (14,14a,14b) mit einer geringeren Höhe (d) als die Werkstückdicke (D) beim Laserschneiden des Werkstücks (6) die Laserleistung des Laserstrahls (5) auf einem der Länge (L) des Microjoints (14,14a,14b) entsprechenden Teilstück der Bahnkurve (K) von einer zum Durchschneiden des Werkstücks (6) ausreichenden, höheren Laserleistung (P_{A}) auf eine zum vollständigen Durchschneiden des Werkstücks (6) nicht ausreichende, niedrigere Laserleistung (Ps) abgesenkt wird und anschließend bei einem nicht am Ende der Bahnkurve (K) liegenden Microjoint (14a) die Laserleistung des Laserstrahls (5) wieder auf die höhere Laserleistung (P_{A}) erhöht wird,
**dadurch gekennzeichnet,**
**dass** der Leistungsabfall (-ΔP) von der höheren auf die niedrigere Laserleistung und der Leistungsanstieg (+ΔP) von der niedrigeren auf die höhere Laserleistung unterschiedlich lange dauern.

2. Verfahren zum Laserschneiden eines insbesondere plattenförmigen Werkstücks (6) entlang einer Bahnkurve (K) mittels eines Laserstrahls (5), wobei zum Erzeugen eines Microjoints (14,14a,14b) mit einer geringeren Höhe (d) als die Werkstückdicke (D) beim Laserschneiden des Werkstücks (6) die Schneidgeschwindigkeit oder der Abstand zwischen einer Schneidgasdüse (10), durch die der Laserstrahl (5) auf das Werkstück (6) gerichtet wird, und dem Werkstück (6) auf einem der Länge (L) des Microjoints (14,14a,14b) entsprechenden Teilstück der Bahnkurve (K) von einer zum Durchschneiden des Werkstücks (6) notwendigen, geringeren Schneidgeschwindigkeit oder einem geringeren Abstand auf eine höhere Schneidgeschwindigkeit oder einen größeren Abstand erhöht wird, so dass kein vollständiges Durchschneiden des Werkstücks (6) erfolgt, und anschließend bei einem nicht am Ende der Bahnkurve (K) liegenden Microjoint (14a) die Schneidgeschwindigkeit oder der Abstand wieder auf die geringere Schneidgeschwindigkeit bzw. den geringeren Abstand gesenkt wird,
**dadurch gekennzeichnet,**
**dass** die Erhöhung und die Absenkung der Schneidgeschwindigkeit oder des Abstands unterschiedlich lange dauern.

3. Verfahren nach Anspruch 1 oder 2, **dadurch gekennzeichnet, dass** der Leistungsabfall (-ΔP) von der höheren auf die niedrigere Laserleistung oder die Erhöhung der Schneidgeschwindigkeit oder die Erhöhung des Abstands der Schneidgasdüse (10) zum Werkstück (6) mindestens 5 ms, bevorzugt mindestens 10 ms, dauert.

4. Verfahren nach einem der vorhergehenden Ansprüche, **dadurch gekennzeichnet, dass** der Leistungsabfall (-ΔP) von der höheren auf die niedrigere Laserleistung und/oder der Leistungsanstieg (+ΔP) von der niedrigeren auf die höhere Laserleistung oder die Änderung der Schneidgeschwindigkeit oder des Abstands der Schneidgasdüse (10) zum Werkstück (6) jeweils mit einem linearen oder nahezu linearen Gradienten (dP/dt) verlaufen.

5. Verfahren nach einem der vorhergehenden Ansprüche, **dadurch gekennzeichnet, dass** die niedrigere Laserleistung (Ps) oder die höhere Schneidgeschwindigkeit oder der größere Abstand der Schneidgasdüse (10) zum Werkstück (6) zeitlich konstant oder nahezu konstant verläuft.

6. Verfahren nach einem der vorhergehenden Ansprüche, **dadurch gekennzeichnet, dass** beim Erzeugen des Microjoints (14,14a,14b) bis auf die Laserleistung oder die Schneidgeschwindigkeit oder den Abstand der Schneidgasdüse (10) zum Werkstück (6) alle anderen Schneidparameter des Laserschneidens unverändert bleiben.

7. Verfahren nach einem der vorhergehenden Ansprüche, **dadurch gekennzeichnet, dass** beim Laserschneiden mit Sauerstoff als Schneidgas (7) der Leistungsanstieg (+ΔP) von der niedrigeren auf die höhere Laserleistung oder die Absenkung der Schneidgeschwindigkeit oder die Absenkung des Abstands der Schneidgasdüse (10) zum Werkstück (6) langsamer erfolgt als der Leistungsabfall (-ΔP) von der höheren auf die niedrigere Laserleistung oder die Erhöhung der Schneidgeschwindigkeit oder die Erhöhung des Abstands der Schneidgasdüse (10) zum Werkstück (6), bevorzugt mindestens doppelt so lange dauert.

8. Verfahren nach Anspruch 7, **dadurch gekennzeichnet, dass** der Leistungsanstieg (+ΔP) von der niedrigeren auf die höhere Laserleistung oder die Absenkung der Schneidgeschwindigkeit oder die Absenkung des Abstands der Schneidgasdüse (10) zum Werkstück (6) mindestens 30 ms dauert.

9. Verfahren nach Anspruch 7 oder 8, **dadurch gekennzeichnet, dass** der Zeitabschnitt (II) der niedrigeren Laserleistung (Ps) oder der höheren Schneidgeschwindigkeit oder des größeren Abstands der Schneidgasdüse (10) zum Werkstück (6) mindestens 20 ms dauert.

10. Verfahren nach einem der Ansprüche 7 bis 9, **dadurch gekennzeichnet, dass** für alle Werkstückdicken (D) die Zeitabschnitte (I-III) des Leistungsabfalls (-ΔP) oder der Geschwindigkeits- oder Abstandserhöhung, der niedrigeren Laserleistung (Ps) oder der höheren Schneidgeschwindigkeit oder des größeren Abstands der Schneidgasdüse (10) zum Werkstück (6), und des Leistungsanstiegs (+ΔP) oder der Geschwindigkeits- oder Abstandsabsenkung gleichlang oder nahezu gleichlang gewählt werden.

11. Verfahren nach einem der Ansprüche 1 bis 6, **dadurch gekennzeichnet, dass** beim Laserschneiden mit Inertgas oder einem Inertgas-Sauerstoff-Gemisch als Schneidgas (7) der Leistungsanstieg (+ΔP) von der niedrigeren auf die höhere Laserleistung oder die Absenkung der Schneidgeschwindigkeit oder die Absenkung des Abstands der Schneidgasdüse (10) zum Werkstück (6) schneller erfolgt als der Leistungsabfall (-ΔP) von der höheren auf die niedrigere Laserleistung oder die Erhöhung der Schneidgeschwindigkeit oder die Erhöhung des Abstands der Schneidgasdüse (10) zum Werkstück (6), bevorzugt mindestens doppelt, besonders bevorzugt mindestens 5mal so schnell.

12. Verfahren nach Anspruch 11, **dadurch gekennzeichnet, dass** der Leistungsanstieg (+ΔP) von der niedrigeren auf die höhere Laserleistung oder die Absenkung der Schneidgeschwindigkeit oder die Absenkung des Abstands der Schneidgasdüse (10) zum Werkstück (6) weniger als 5 ms, bevorzugt weniger als 2 ms, dauert.

13. Verfahren nach Anspruch 11 oder 12, **dadurch gekennzeichnet, dass** der Zeitabschnitt (II) der niedrigeren Laserleistung (Ps) oder der höheren Schneidgeschwindigkeit oder des größeren Abstands der Schneidgasdüse (10) zum Werkstück (6) mindestens 5 ms, bevorzugt mindestens 8 ms, dauert.

14. Verfahren nach einem der Ansprüche 11 bis 13, **dadurch gekennzeichnet, dass** für alle Werkstückdicken (D) die Zeitabschnitte (I-III) des Leistungsabfalls (-ΔP) oder der Geschwindigkeits- oder Abstandserhöhung, der niedrigeren Laserleistung (Ps) oder der höheren Schneidgeschwindigkeit oder des größeren Abstands der Schneidgasdüse (10)zum Werkstück (6), und des Leistungsanstiegs (+ΔP) oder der Geschwindigkeits- oder Abstandsabsenkung gleichlang oder nahezu gleichlang gewählt werden.

15. Computerprogrammprodukt, welches Codemittel aufweist, die zum Durchführen aller Schritte des Verfahrens nach einem der vorhergehenden Ansprüche angepasst sind, wenn das Programm auf einer Steuerung (15) einer Laserschneidmaschine (1) abläuft.

## Claims

1. A method for laser cutting a particularly plate-shaped workpiece (6) along a curve (K) by means of a laser beam (5), wherein a microjoint (14, 14a, 14b) with a lower height (d) than the workpiece thickness (D) is produced during laser cutting of the workpiece (6), wherein the laser power of the laser beam (5) on a segment of the curve (K) corresponding to the length (L) of the microjoint (14, 14a, 14b) is reduced from a higher laser power (P_{A}) sufficient for cutting through the workpiece (6) to a lower laser power (Ps) insufficient for completely cutting through the workpiece (6), and then if the microjoint (14a) is not at the end of the curve (K), the laser power of the laser beam (5) is increased again to the higher laser power (P_{A}),
**characterised in that**
the power drop (-ΔP) from the higher to the lower laser power and the power increase (+ΔP) from the lower to the higher laser power take different lengths of time.

2. A method for laser cutting a particularly plate-shaped workpiece (6) along a curve (K) by means of a laser beam (5), wherein a microjoint (14, 14a, 14b) with a lower height (d) than the workpiece thickness (D) is produced during laser cutting of the workpiece (6), wherein the cutting speed or the distance between a cutting gas nozzle (10), through which the laser beam (5) is directed onto the workpiece (6), and the workpiece (6) on the length (L) of the segment of the curve (K) corresponding to the length (L) of the microjoint (14, 14a, 14b) is increased from a lower cutting speed or a shorter distance sufficient for cutting through the workpiece (6) to a higher cutting speed or a longer distance, so that the workpiece (6) is not completely cut through, and then for a microjoint (14a) that is not at the end of the curve (K), the cutting speed or the distance is reduced again to the lower cutting speed or the smaller distance,
**characterised in that**
the increasing and the reducing of the cutting speed or distance takes different amounts of time.

3. The method according to claim 1 or 2, **characterised in that** the power drop (-ΔP) from the higher to the lower laser power or the increase in the cutting speed or the increase in the distance between the cutting gas nozzle (10) and the workpiece (6) lasts at least 5 ms, preferably at least 10 ms.

4. The method according to one of the preceding claims, **characterised in that** the power drop (-ΔP) from the higher to the lower laser power and/or the power increase (+ΔP) from the lower to the higher laser power or the change in cutting speed or distance from the cutting gas nozzle (10) to the workpiece (6) respectively proceeds with a linear or almost linear gradient (dP/dt).

5. The method according to one of the preceding claims, **characterised in that** the lower laser power (Ps) or the higher cutting speed or the larger distance between the cutting gas nozzle (10) and the workpiece (6) is constant or almost constant over time.

6. The method according to one of the preceding claims, **characterised in that** when producing the microjoint (14, 14a, 14b), all other cutting parameters of the laser cutting remain unchanged except for the laser power or the cutting speed or the distance between the cutting gas nozzle (10) and the workpiece (6).

7. The method according to one of the preceding claims, **characterised in that** during laser cutting with oxygen as the cutting gas (7), the power increase (+ΔP) from the lower to the higher laser power or the reduction in the cutting speed or the reduction in the distance between the cutting gas nozzle (10) and the workpiece (6) takes place more slowly than the power drop (-ΔP) from the higher to the lower laser power or the increase in the cutting speed or the increase in the distance between the cutting gas nozzle (10) and the workpiece (6), preferably at least twice as long.

8. The method according to claim 7, **characterised in that** the power increase (+ΔP) from the lower to the higher laser power or the reduction in the cutting speed or the reduction in the distance between the cutting gas nozzle (10) and the workpiece (6) lasts at least 30 ms.

9. The method according to claim 7 or 8, **characterised in that** the period (II) of the lower laser power (Ps) or the higher cutting speed or the greater distance between the cutting gas nozzle (10) and the workpiece (6) lasts at least 20 ms.

10. The method according to one of claims 7 to 9, **characterised in that**, for all workpiece thicknesses (D), the periods (I-III) of the power drop (-ΔP) or the speed or distance increase, the lower laser power (Ps) or the higher cutting speed or the greater distance between the cutting gas nozzle (10) and the workpiece (6), and the power increase (+ΔP) or the speed reduction or distance reduction, can be chosen to be the same or almost the same.

11. The method according to one of claims 1 to 6, **characterised in that** when laser cutting with inert gas or an inert gas-oxygen mixture as the cutting gas (7), the power increase (+ΔP) from the lower to the higher laser power or the reduction in the cutting speed or the reduction in the distance between the cutting gas nozzle (10) and the workpiece (6) occurs faster than the power drop (-ΔP) from the higher to the lower laser power or the increase in cutting speed or the increase in the distance between the cutting gas nozzle (10) and the workpiece (6), preferably at least twice as fast, particularly preferably at least 5 times as fast.

12. The method according to claim 11, **characterised in that** the power increase (+ΔP) from the lower to the higher laser power or the reduction in the cutting speed or the reduction in the distance between the cutting gas nozzle (10) and the workpiece (6) lasts less than 5 ms, preferably less than 2 ms.

13. The method according to claim 11 or 12, **characterised in that** the time segment (II) of the lower laser power (Ps) or the higher cutting speed or the greater distance between the cutting gas nozzle (10) and the workpiece (6) lasts at least 5 ms, preferably at least 8 ms.

14. The method according to one of claims 11 to 13, **characterised in that**, for all workpiece thicknesses (D), the periods (I-III) of the power drop (-ΔP) or of the speed increase or distance increase, the lower laser power (Ps) or the higher cutting speed or the greater distance between the cutting gas nozzle (10) and the workpiece (6), and the increase in power (+ΔP) or the speed reduction or distance reduction can be chosen to be the same or almost the same.

15. A computer program product which has code means which are adapted to carry out all the steps of the method according to one of the preceding claims when the program runs on a controller (15) of a laser cutting machine (1).

## Revendications

1. Procédé de découpe au laser d'une pièce (6), en particulier en forme de plaque, le long d'une trajectoire (K) au moyen d'un faisceau laser (5), dans lequel un microjoint (14, 14a, 14b) présentant une hauteur (d) inférieure à l'épaisseur de la pièce (D) est produit lors de la découpe au laser de la pièce (6), dans lequel la puissance laser du faisceau laser (5), sur une section de la trajectoire (K) correspondant à la longueur (L) du microjoint (14, 14a, 14b), diminue d'une puissance laser (P_{A}) supérieure, suffisante pour couper complètement la pièce (6), à une puissance laser (Ps) inférieure, non suffisante pour couper complètement la pièce (6), puis, lorsque le microjoint (14a) n'est pas positionné à l'extrémité de la trajectoire (K), la puissance laser du faisceau laser (5) augmente à nouveau jusqu'à la puissance laser (P_{A}) supérieure,
**caractérisé en ce que**
la chute de puissance (-ΔP) de la puissance laser supérieure à celle inférieure et la montée de puissance (+ΔP) de la puissance laser inférieure à celle supérieure prennent des durées différentes.

2. Procédé de découpe au laser d'une pièce (6), en particulier en forme de plaque, le long d'une trajectoire (K) au moyen d'un faisceau laser (5), dans lequel un microjoint (14, 14a, 14b) présentant une hauteur (d) inférieure à l'épaisseur (D) de la pièce est produit lors de la découpe au laser de la pièce (6), dans lequel la vitesse de coupe ou la distance entre une buse de gaz de coupe (10), à l'aide de laquelle le faisceau laser (5) est dirigé sur la pièce (6), et la pièce (6), sur la longueur (L) de la section de la trajectoire (K) correspondante à la longueur (L) du microjoint (14, 14a, 14b), est augmentée d'une vitesse de coupe inférieure ou d'une distance inférieure, suffisante pour couper complètement la pièce (6), à une vitesse de coupe supérieure ou une distance supérieure de telle sorte que la pièce (6) n'est pas complètement découpée, puis, lorsque le microjoint (14a) n'est pas positionné à l'extrémité de la trajectoire (K), la vitesse de coupe ou la distance diminue à nouveau jusqu'à la vitesse de coupe inférieure ou la distance inférieure,
**caractérisé en ce que**
l'augmentation et la diminution de la vitesse de coupe ou de la distance sont de durée différente.

3. Procédé selon la revendication 1 ou 2, **caractérisé en ce que** la chute de puissance (-AP) de la puissance laser supérieure à celle inférieure ou l'augmentation de la vitesse de coupe ou l'augmentation de la distance entre la buse de gaz de coupe (10) et la pièce (6) est d'au moins 5 ms, de préférence d'au moins 10 ms.

4. Procédé selon l'une quelconque des revendications précédentes, **caractérisé en ce que** la chute de puissance (-ΔP) de la puissance laser supérieure à la puissance laser inférieure et/ou la montée de puissance (+ΔP) de la puissance laser inférieure à la puissance laser supérieure ou le changement de la vitesse de coupe ou de la distance de la buse de gaz de coupe (10) à la pièce (6) s'effectue respectivement à un gradient linéaire ou presque linéaire (dP/dt).

5. Procédé selon l'une quelconque des revendications précédentes, **caractérisé en ce que** la puissance laser (Ps) inférieure ou la vitesse de coupe supérieure ou la distance supérieure entre la buse de gaz de coupe (10) et la pièce (6) est constante ou presque constante dans le temps.

6. Procédé selon l'une quelconque des revendications précédentes, **caractérisé en ce que** lors de la production du microjoint (14, 14a, 14b), à l'exception de la puissance laser ou de la vitesse de découpe ou de la distance entre la buse de gaz de découpe (10) et la pièce (6), tous les autres paramètres de coupe de la découpe au laser restent inchangés.

7. Procédé selon l'une quelconque des revendications précédentes, **caractérisé en ce que** lors de la découpe au laser à l'aide de l'oxygène comme gaz de coupe (7), la montée de puissance (+ΔP) de la puissance laser inférieure à celle supérieure ou la diminution de la vitesse de coupe ou la diminution de la distance entre la buse de gaz de coupe (10) et la pièce (6) est effectuée plus lentement que la chute de puissance (-ΔP) de la puissance laser supérieure à celle inférieure ou l'augmentation de la vitesse de coupe ou l'augmentation de la distance entre la buse de gaz de coupe (10) et la pièce (6), est, de préférence au moins deux fois plus longue.

8. Procédé selon la revendication 7 **caractérisé en ce que** la montée de puissance (+ΔP) de la puissance laser inférieure à celle supérieure ou la diminution de la vitesse de coupe ou la diminution de la distance entre la buse de gaz de coupe (10) et la pièce (6) est d'au moins 30 ms.

9. Procédé selon la revendication 7 ou 8, **caractérisé en ce que** l'intervalle (II) de la puissance laser (Ps) inférieure ou de la vitesse de coupe supérieure ou de la distance supérieure entre la buse de gaz de coupe (10) et la pièce (6) est d'au moins 20 ms.

10. Procédé selon l'une quelconque des revendications 7 à 9, **caractérisé en ce que** pour toutes les épaisseurs de pièce (D) les intervalles (I-III) de chute de puissance (-ΔP) ou d'augmentation de vitesse ou de distance, la puissance laser (Ps) inférieure ou la vitesse de coupe supérieure ou la distance supérieure entre la buse de gaz de coupe (10) et la pièce (6), et la montée de puissance (+ΔP) ou la diminution de vitesse ou de distance peuvent être choisis égaux ou presque égaux.

11. Procédé selon l'une quelconque des revendications 1 à 6, **caractérisé en ce que**, lors de la découpe au laser à l'aide du gaz inerte ou d'un mélange de gaz inerte et d'oxygène comme gaz de coupe (7), la montée de puissance (+ΔP) de la puissance laser inférieure à celle supérieure ou la diminution de la vitesse de coupe ou la diminution de la distance entre la buse de gaz de coupe (10) et la pièce (6) est effectuée plus rapidement que la chute de puissance (-ΔP) de la puissance laser supérieure à celle inférieure ou l'augmentation de la vitesse de coupe ou l'augmentation de la distance entre la buse de gaz de coupe (10) et la pièce (6), est, de préférence au moins 5 fois plus rapide.

12. Procédé selon la revendication 11 **caractérisé en ce que** la montée de puissance (+ΔP) de la puissance laser inférieure à celle supérieure ou la diminution de la vitesse de coupe ou la diminution de la distance entre la buse de gaz de coupe (10) et la pièce (6) est inférieure à 5 ms, de préférence inférieure à 2 ms.

13. Procédé selon la revendication 11 ou 12, **caractérisé en ce que** l'intervalle (II) de la puissance laser (Ps) inférieure ou de la vitesse de coupe supérieure ou de la distance supérieure entre la buse de gaz de coupe (10) et la pièce (6) est d'au moins 5 ms, de préférence d'au moins 8 ms.

14. Procédé selon l'une quelconque des revendications 11 à 13, **caractérisé en ce que** pour toutes les épaisseurs de pièce (D) les intervalles (I-III) de chute de puissance (-ΔP) ou d'augmentation de vitesse ou de distance, la puissance laser (Ps) inférieure ou la vitesse de coupe supérieure ou la distance supérieure entre la buse de gaz de coupe (10) et la pièce (6), et la montée de puissance (+ΔP) ou la diminution de vitesse ou de distance peuvent être choisis égaux ou presque égaux.

15. Produit programme informatique, qui comporte un moyen de code conçu pour mettre en oeuvre toutes les étapes du procédé selon l'une quelconque des revendications précédentes lorsque le programme s'exécute sur un dispositif de commande (15) d'une machine de découpe au laser (1).
